# EUROPEAN PATENT SPECIFICATION

(11) **EP 0 867 319 B1**
(45) Date of publication and mention of the grant of the patent: **14.05.2003**
(21) Application number: 98301611.4
(22) Date of filing: 04.03.1998
(51) Int. Cl.: B60H 1/00

(54) **Air conditioning apparatus**
Klimaanlage
Dispositif de conditionnement d'air

(30) Priority: 25.03.1997 JP 9168497
(43) Date of publication of application: 30.09.1998
(73) Proprietor: Sanden Corporation, Isesaki-shi, Gunma 372-8502 (JP)
(72) Inventor: Sakurai, Hirotaka, Isesaki-shi, Gunma, 372-8502 (JP)
(74) Representative: Haley, Stephen

(56) References cited:
- FR-A- 2 735 724

## Description

The present invention relates to a one-box, unit type air conditioning apparatus according to the preamble of claim .

Document FR-A-2 735 724 shows an air conditioning apparatus of this type, wherein the heat exchanger is slidably accomodated within a box.

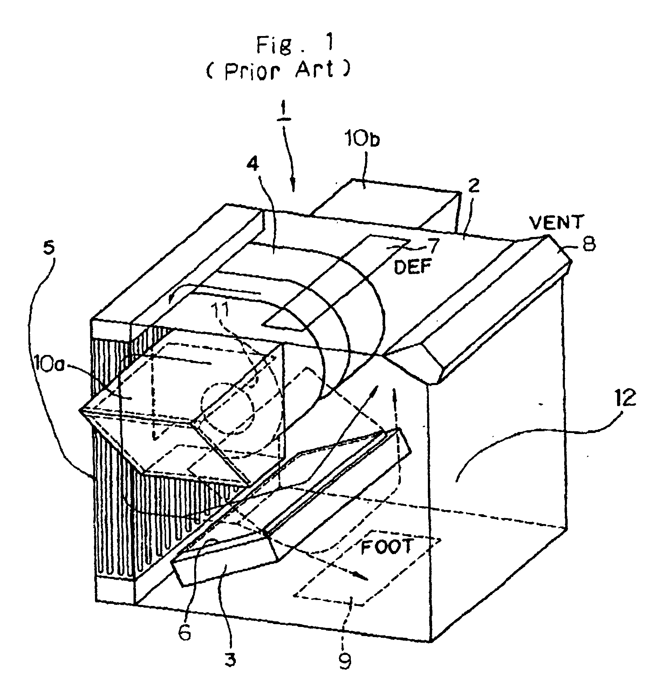

Referring to **Fig. 1,** a known one-box, unit-type air conditioning apparatus 1 is shown. Box 2 is typically made of plastic or resin. Intake cases 10a and 10b are formed integrally with box 2 and are provided on both sides of box 2. Damper 11 is provided in each of intake cases 10a and 10b, and selects an air source as from either the inside of a vehicle compartment, or from outside of the vehicle compartment. Blower unit 4, evaporator 5, and heater core 3 are disposed within box 2 as indicated, and are secured thereto. Blower unit 4 may include a doubleheaded, multi-blade fan. Evaporator 5 is formed as a multi-tube heat exchanger. Air mix damper 6 is provided near heater core 3. In the roof and floor of box 2, outlet ports 7, 8, and 9 are provided for discharging the conditioned air.

Blower unit 4 draws air from the intake cases 10a and 10b, and forces this air against the upper part of evaporator 5. The forced air travels into and along the interior of evaporator 5, exchanges heat with refrigerant within evaporator 5, exits evaporator 5, and then travels to heater core 3. Thus, the air flow direction essentially follows a U-shaped path, changing direction within evaporator 5. Air mix damper 6 controls the relative amounts of air passing through heater core 3 and air bypassing heater core 3. Subsequently, the air that passed through heater core 3 and air that bypassed heater core 3 are mixed in air mix zone 12, and the resulting temperature-regulated air exits through outlet ports 7, 8, and 9.

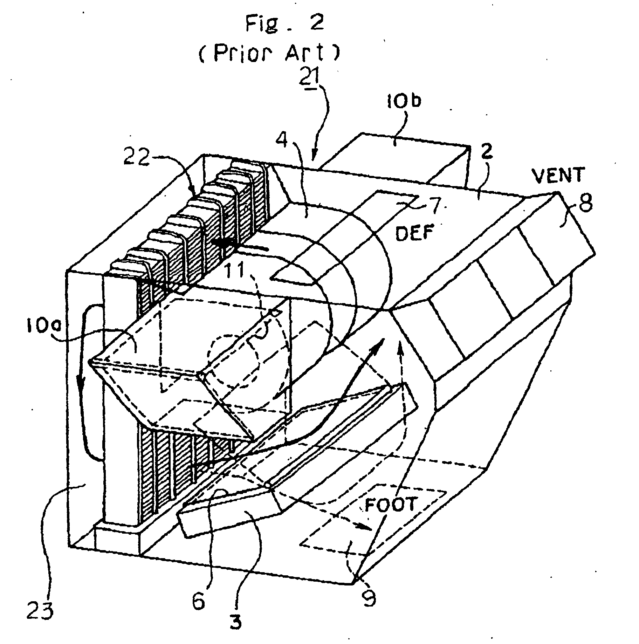

Referring now to **Fig. 2,** another conventional one-box, unit-type air conditioning apparatus 21 is shown. Evaporator 22 is formed as a laminated-type heat exchanger instead of the multi-tube heat exchanger of **Fig. 1.** Because the forced air from blower unit 4 cannot travel along the interior of evaporator 22, space 23 is provided to allow the air that has been forced through the upper portion of evaporator 22 to change flow direction behind evaporator 22 and pass through the lower portion of evaporator 22. The remaining structure and air flow of the air conditioning apparatus 21 is similar to that described above with reference to **Fig. 1.**

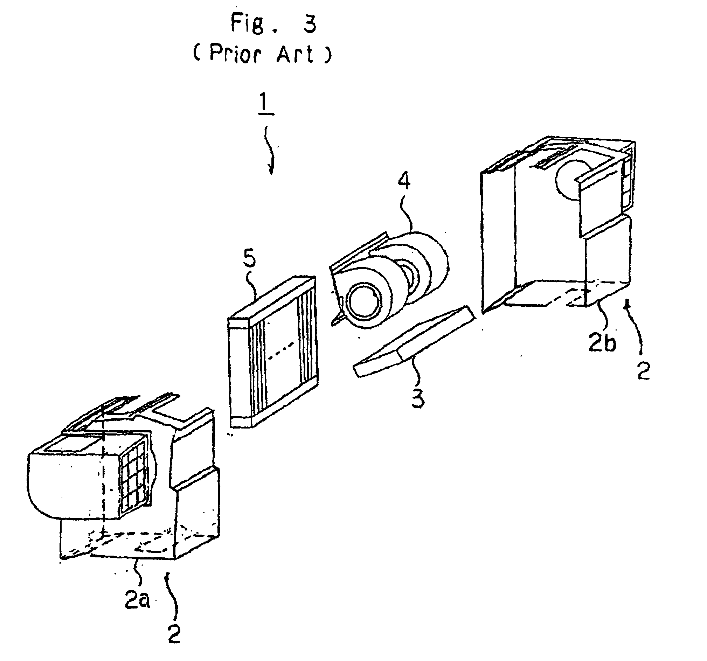

Referring to **Fig. 3**, an exploded perspective view of one-box, unit-type air conditioning apparatus 1 of **Fig. 1** is illustrated. Box 2 includes right half member 2a and left half member 2b. Blower unit 4, evaporator 5, and heater core 3 are secured within box 2. Thus, when it becomes necessary, for repairs or other reasons, to remove blower unit 4, evaporator 5, or heater core 3 from one-box, unit-type air conditioning apparatus 1; one-box, unit-type air conditioning apparatus 1 is first removed from the vehicle. Further, to access blower unit 4, evaporator 5, or heater core 3, case 2 is disassembled into its right-half member 2a and its left-half member 2b. Additionally, it is often necessary to remove an inner panel of the vehicle in order to remove one-box, unit-type air conditioning apparatus 1. Thus, because of the additional disassembly required, additional time and labor is necessary in order to maintain the conventional one-box, unit-type air conditioning apparatus.

Therefore, a need has arisen for a structure for a one-box, unit-type air conditioning apparatus that is less complicated to maintain.

Accordingly, it is an object of the present invention to provide an one-box, unit-type air conditioning apparatus permitting readily access to internal components. It is a further object of the present invention to provide an one-box, unit-type air conditioning apparatus from which the blower unit, the evaporator, or the heater core may be readily inserted or removed.

According to an embodiment of the present invention, a one-box, unit-type air conditioning apparatus comprises a box having a pair of side walls, a blower unit, an evaporator, and a heater core. The air blown by the blower unit changes direction within the evaporator or within a space adjacent to the evaporator, and is directed to the heater core and air mix damper. The air that has passed the heater core and bypassed the heater core is mixed in an air mix zone, and is discharged through outlet ports. At least one opening in one of the side walls is provided for insertion and removal of the blower unit, the evaporator, and the heater core. Within the box, guiding structures for slidably accommodating the blower unit, evaporator, and heater core are provided. The blower unit may have flanges which are received by the guiding structures, and the flanges may form an air separation plate. Further, handles may be attached to the blower unit, evaporator, and heater core.

For a more complete understanding of the present invention and the objects, features, and advantages thereof, reference is made to the following descriptions taken in connection with the accompanying set of drawings in which:
**Fig. 1** is a perspective view of a known one-box, unit-type air conditioning apparatus;
**Fig. 2** is a perspective view of another known one-box, unit-type air conditioning apparatus;
**Fig. 3** is an exploded perspective view of the air conditioning apparatus shown in **Fig. 1;**
**Fig. 4** is an exploded perspective view of a one-box, unit-type air conditioning apparatus in accordance with an embodiment of the present invention;
**Fig. 5** is an enlarged detailed view of the side view of the guiding groove for the blower unit shown in **Fig. 4;**
**Fig. 6** is a partial cross-sectional view of the evaporator along the line VI-VI' in **Fig. 4;**
**Fig. 7** is a partial cross-sectional view of the heater core along the line VI-VI' in **Fig. 4**; and
**Fig. 8** is a partial cross-sectional view of the evaporator of the one-box, unit-type air conditioning apparatus according to a modification of the present invention.

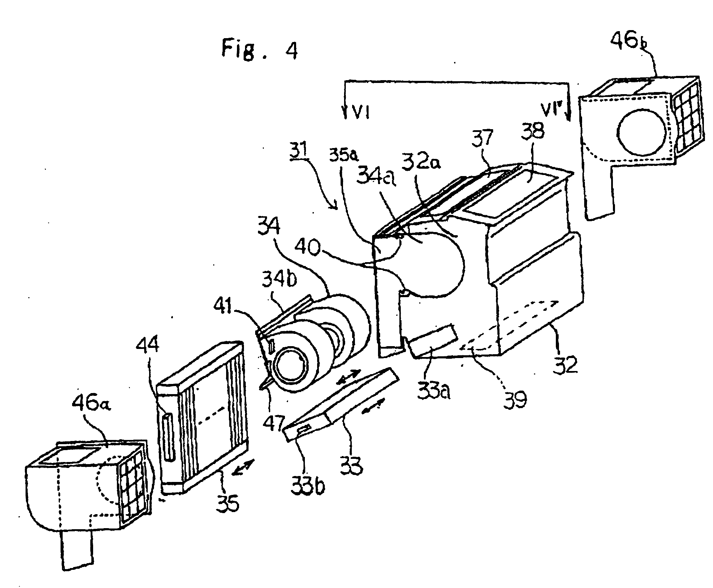

Referring to **Fig. 4**, one-box, unit-type air conditioning apparatus 31 is depicted in accordance with one embodiment of the present invention. Outlet ports 37, 38, and 39 for discharging temperature regulated air are provided in the roof and the floor of box 32. Box 32 has three openings 33a, 34a, and 35a, on its one side wall 32a through which heater core 33, blower unit 34, and evaporator 35 may be inserted or removed. Within box 32, guiding structures, such as grooves or rails, for heater core 33, blower unit 34, and evaporator 35 are provided. For example guiding grooves 40 are indicated in **Fig. 4**. Upper flange 34b and lower flange 47 of blower unit 34 may be received into guiding grooves 40. Thus, upper flange 34b and lower flange 47 perform the function of guide elements when they are inserted into guiding grooves 40, and the function of air flow separating plates. Handles 33b, 41, and 44 may be attached on one side of heater core 33, blower unit 34, and evaporator 35, respectively.

After heater core 33, blower unit 34, and evaporator 35 are inserted into their respective openings 33a, 34a, and 35a, intake cases 46a and 46b are then secured to both sides of box 32. Thus, if it becomes necessary to remove blower unit 34 for maintenance or any other reason, blower unit 34 may be readily removed through opening 34a after intake case 46a has been removed. Heater core 33 or evaporator 35 may also be similarly removed. Thus, it is unnecessary to remove one-box, unit-type air condition apparatus 31 from the vehicle because it is no long required to disassemble case 32 into a right half member and a left half member in order to remove blower unit 34, heater core 33, or evaporator 35. Further, it is not necessary to remove the inner panel of the vehicle when performing such maintenance. As a result, maintenance work of the air conditioning apparatus is simplified and less time-consuming.

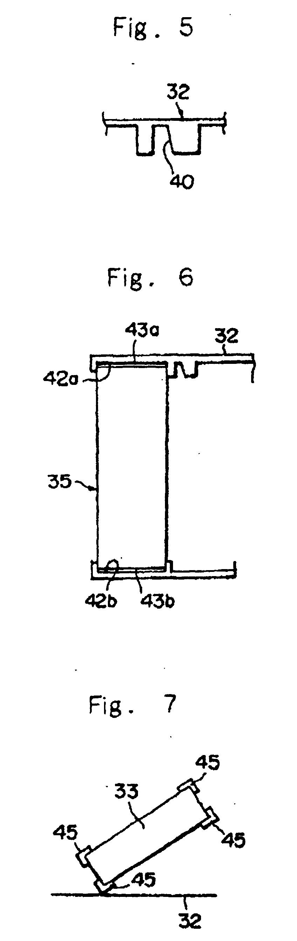

In order to supplement the explanation above, the guiding structures for blower unit 34, heater core 33, and evaporator 35 are shown in **Figs. 5-7** and will be discussed in further detail below. With reference to **Fig. 5,** guiding groove 40 for blower unit 34 is provided in box 32. Moreover, with reference to **Fig. 6**, guiding groove 42a is provided on the top of box 32, and guiding groove 42b is provided on the bottom of box 32. Further, packing 43a is provided between the top of evaporator 35 and guiding groove 42a, and packing 43b is provided between the bottom of evaporator 35 and guiding groove 42b. In **Fig. 7**, bridge parts 45, which guide heater core 33 into box 32, are shown. Each of four bridge parts 45 has an L-shaped cross-section, and extend between the right side wall and the left side wall within box 32.

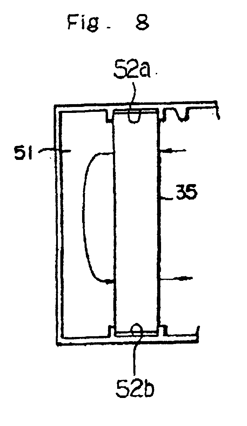

In **Fig. 8**, another embodiment of the present invention corresponding to the known air conditioning apparatus 21 of **Fig. 2** is illustrated. Because evaporator 35 is composed of a laminated-type heat exchanger, guiding grooves 52a and 52b are disposed at positions so as to create space 51. The air flow direction changes within this area, essentially following a U-shaped path.

## Claims

1. A one-box, unit-type air conditioning apparatus comprising: a box (32) having a pair of side walls (32a) and containing a blower unit (34), an evaporator (35), and a heater core (33); **characterised by** at least one opening (33a, 34a, 35a) in at least one of the side walls for insertion and removal of the blower unit, the evaporator, and the heater core; by at least one guiding structure (40, 42a, 42b, 52a, 52b) within the box for slidably accommodating the blower unit, the evaporator, and the heater core; and by the blower unit (34) having flange parts (34b,47) which are received by at least one of the guiding structures (40).

2. Air conditioning apparatus according to claim 1, wherein the evaporator (35) includes a space within which a change in air flow direction occurs (Fig. 6).

3. Air conditioning apparatus according to claim 1, where there is a space (51) adjacent to the evaporator (35) within which a change in air flow direction occurs (Fig. 8).

4. Air conditioning apparatus according to any one of the preceding claims, wherein at least one handle (41) is attached to the blower unit (34) such that the blower unit may be manipulated with the handle.

5. Air conditioning apparatus according to any one of the preceding claims, wherein at least one handle (44) is attached to the evaporator (35) such that the evaporator may be manipulated with the handle.

6. Air conditioning apparatus according to any one of the preceding claims, wherein at least one handle (33b) is attached to the heater core (33) such that the heater core may be manipulated with the handle.

7. Air conditioning apparatus according to any one of the preceding claims, wherein each of the flange parts (34b,47) of the blower unit (34) are received by the guiding structure (40) to form an air flow separation plate.

8. An automobile air conditioning system incorporating an air conditioning apparatus according to any one of the preceding claims.

## Patentansprüche

1. Klimaanlage in einem Kasten vom Einheitstyp mit:
einem Kasten (32) mit einem Paar von Seitenwänden (32a), der eine Gebläseeinheit (34), einen Verdampfer (35) und einen Heizkern (33) enthält;
**gekennzeichnet durch**:
mindestens eine Öffnung (33a, 34a, 35a) in mindestens einer der Seitenwände zum Einführen und Entfernen der Gebläseeinheit, des Verdampfers und des Heizkernes;
mindestens eine Führungsstruktur (40, 42a, 42b, 52a, 52b) innerhalb des Kastens zum gleitfähigen Aufnehmen der Gebläseeinheit, des Verdampfers und des Heizkernes;
wobei die Gebläseeinheit (34) Flanschteile (34b, 47) aufweist, die **durch** mindestens eine der Führungsstrukturen (40) aufgenommen sind.

2. Klimaanlage nach Anspruch 1, bei der der Verdampfer (35) einen Raum enthält, in dem eine Änderung in einer Luftstromrichtung auftritt. (Fig. 6)

3. Klimaanlage nach Anspruch 1, bei der ein Raum (51) benachbart zu dem Verdampfer (35) vorgesehen ist, in dem eine Änderung einer Luftstromrichtung auftritt. (Fig. 8)

4. Klimaanlage nach einem der vorhergehenden Ansprüche, bei der mindestens ein Handgriff (41) an der Gebläseeinheit (34) derart angebracht ist, daß die Gebläseeinheit mit dem Handgriff manipuliert werden kann.

5. Klimaanlage nach einem der vorhergehenden Ansprüche, bei der mindestens ein Handgriff (44) an dem Verdampfer (35) derart angebracht ist, daß der Verdampfer mit dem Handgriff manipuliert werden kann.

6. Klimaanlage nach einem der vorhergehenden Ansprüche, bei der mindestens ein Handgriff (33b) an dem Heizkern (33) derart angebracht ist, daß der Heizkern mit dem Handgriff manipuliert werden kann.

7. Klimaanlage nach einem der vorhergehenden Ansprüche, bei der jedes der Flanschteile (34b, 47) der Gebläseinheit (34) von der Führungsstruktur (40) zum Bilden einer Luftstromtrennplatte aufgenommen ist.

8. Kraftfahrzeugklimatisierungssystem, das eine Klimaanlage nach einem der vorhergehenden Ansprüche enthält.

## Revendications

1. Dispositif de conditionnement d'air de type unitaire, en boîtier unique, comprenant :
un boîtier (32) muni d'une paire de parois latérales (32a) et contenant un bloc de soufflerie (34), un évaporateur (35) et un noyau de chauffage (33) ;
**caractérisé en ce qu'**
au moins une ouverture (33a, 34a, 35a) est formée dans l'une au moins des parois latérales pour permettre l'introduction et l'extraction du bloc de soufflerie, de l'évaporateur et du noyau de chauffage ;
au moins une structure de guidage (40, 42a, 42b, 52a, 52b) est prévue dans le boîtier pour recevoir en glissement le bloc de soufflerie, l'évaporateur et le noyau de chauffage ; et
le bloc de soufflerie (34) comporte des parties de rebords (34b, 47) qui sont reçues par l'une au moins des structures de guidage (40).

2. Dispositif de conditionnement d'air selon la revendication 1,
dans lequel
l'évaporateur (35) comprend un espace à l'intérieur duquel se produit un changement de direction de l'écoulement d'air (figure 6).

3. Dispositif de conditionnement d'air selon la revendication 1,
dans lequel
il existe un espace (51) adjacent à l'évaporateur 35, dans lequel se produit un changement de direction de l'écoulement d'air (figure 8).

4. Dispositif de conditionnement d'air selon la revendication 1,
dans lequel
au moins une poignée (41) est attachée au bloc de soufflerie (34) de façon qu'on puisse manipuler ce bloc de soufflerie au moyen de la poignée.

5. Dispositif de conditionnement d'air selon l'une quelconque des revendications précédentes,
dans lequel
au moins une poignée (44) est attachée à l'évaporateur (35) de façon qu'on puisse manipuler cet évaporateur au moyen de la poignée.

6. Dispositif de conditionnement d'air selon l'une quelconque des revendications précédentes,
dans lequel
au moins une poignée (33b) est attachée au noyau de chauffage (33) de façon qu'on puisse manipuler ce noyau de chauffage au moyen de la poignée.

7. Dispositif de conditionnement d'air selon l'une quelconque des revendications précédentes,
dans lequel
chacune des parties de rebords (34b, 47) du bloc de soufflerie (34), vient se loger dans la structure de guidage (40) pour former une plaque de séparation d'écoulement d'air.

8. Système de climatisation d'automobile incorporant un dispositif de conditionnement d'air selon l'une quelconque des revendications précédentes.
